# EUROPEAN PATENT SPECIFICATION

(11) **EP 3 816 022 B1**
(45) Date of publication and mention of the grant of the patent: **04.05.2022**
(21) Application number: 19206921.9
(22) Date of filing: 04.11.2019
(51) Int. Cl.: B62D 25/24

(54) **DRAIN PLUG**
ABLAUFSTÖPSEL
BOUCHON DE VIDANGE

(43) Date of publication of application: 05.05.2021
(73) Proprietor: Illinois Tool Works, Inc., Glenview, Illinois 60025 (US)
(72) Inventor: RODRIGUES, Philippe, Glenview, Illinois 60025 (US)
(74) Representative: HGF

(56) References cited:
- WO-A1-2012/155127
- DE-A1- 3 021 388
- DE-A1-102018 132 220
- JP-A- S5 967 177
- US-A- 5 709 309

## Description

### Technical Field of Invention

The invention concerns a drain plug, in particular a water drainage plug which can be inserted into an aperture of a wall structure, for example, a wall structure of a vehicle.

### Background

A drain plug is a device that can be affixed to a hole within a structure such that fluid, particularly liquid, for example water, may be drained from an upper part of the structure to a lower part of the structure.

In some applications, for example in the automotive industry, it is necessary to drain water that accumulates in an upper part of a wall structure, such as, for example, a cockpit inside a vehicle, whilst also preventing any splashes of water from a lower part of the wall structure, such as, for example, outside the vehicle, from passing through the hole in the wall structure. In the automotive industry, it is usually not possible to completely stop water from seeping into the vehicle, if the wall structure is exposed to water for an excessive period of time.

The prior art notably includes the document WO 2012/155127 A1, which seeks to provide water drainage from an upper part of a horizontal wall to a lower part of a horizontal wall, whilst preventing splashes of water from passing from the lower part of the horizontal wall to an upper part of the horizontal wall.

As shown in Figure 1, the drain plug 10 disclosed in WO2012/155127A1 can be inserted into a hole 'H' provided in a horizontal wall 'W'. The plug 10 includes a peg-like element 12 having a head 16 including a number of apertures formed between arms 20 for the passage of water, a shank 22 extending downwardly from the head 16 and a helical formation 24 extending radially from a portion of the shank 22. The plug also includes a cup-like cover 14 including a lower wall 30 connected to a lower end of the shank 22, a discharge aperture 36 in the lower wall 30, a side wall 32 in contact with an outer edge of the helical formation 24 and an upper edge 34 which can contact the lower surface of the wall 'W' around the hole 'H'. The helical formation 24 allows water, flowing through the apertures 18 and into the cup-like cover 14, to be discharged through the discharge aperture 36 adjacent a recess 38 in the helical formation 24. That is, the drainage plug 10 discharges water at a lower portion of the wall W whilst preventing splashes of water from the lower portion of the wall 'W' passing into an upper portion of the wall 'W'.

However, the water drainage plug described in WO 2012/155127 A1 suffers several drawbacks. For example, whilst splashes of water are prevented from passing through the drainage plug 10, debris and particles may still pass through the drainage plug 10 and into the upper part of the horizontal wall. Additionally, due to the structure of the drainage feature, external noise may readily pass from the lower part of the horizontal wall to the upper part of the horizontal wall.

Therefore, it is an object of the present invention to provide an improved drainage plug capable of preventing debris and other particles from passing through. In addition, it is a further object of the present invention to provide a drainage plug with improved acoustic characteristics so as to minimise the external noise travelling through the drainage plug.

### Summary

Aspects of the invention are set of in the independent claim. Dependent claims describe optional features.

In one aspect, there is provided a drain plug comprising an attachment member, configured to fixingly couple into an aperture of a wall structure, so as to provide a fluid path along a longitudinal axis of said attachment member through the wall structure, and comprising a casing member axially protruding along said longitudinal axis towards a distal end of said attachment member. The drain plug further comprises a fluid flow member, sealingly engageable with said casing member, and comprising at least one fluid conduit, extending between an inlet port and an outlet port of said drain plug, said fluid conduit comprising at least one first region towards said inlet port and at least one second region, downstream of said at least one first region towards said outlet port, wherein the cross-sectional area of said at least one first region is greater than the cross-sectional area of said at least one second region.

This provides the advantage that a fluid, in particular a liquid, such as, for example water, may be drained from an upper part of the wall structure to a lower part of the wall structure, whilst preventing splashes of water and debris or particles from passing through. In particular, the reduced cross-section area towards the outlet port increases the fluid speed compared to the inlet port, thus, minimising the possibility of any water of particles to move back towards the inlet port. Further, the converging fluid flow path reduces the amount of noise that can actually travel back towards the inlet port, i.e. the changing cross-sectional area may provide acoustic back-reflections and interferences that are configured to cancel or at least reduce any noise (sound waves) travelling towards the inlet port. Advantageously, said fluid conduit may be a helical fluid conduit that is uniformly converging from said at least one first region towards said at least one second region.

This provides the advantage that splashes of fluid, in particular a liquid, for example water, and debris or particles are directed towards the outlet port, thereby, enhancing "resistance" to said splashes of fluid or said debris or particles passing into an upper part of the wall structure. That is, the helical fluid conduit may provide a favourable ratio of filling, i.e. drainage to emptying.

Advantageously, the pitch of said helical conduit may differ between said at least one first region and said at least one second region.

Alternatively, said fluid conduit may further comprises at least one siphon.

This provides the advantage of a complex fluid path providing resistance or obstruction to fluid flowing back towards the inlet port, as well as, noise travelling through the fluid conduit back towards the inlet port.

Advantageously, said at least one siphon further may comprise a first siphon structure in fluid communication with said inlet port and at least one second siphon structure downstream from said first siphon structure and in fluid communication with said outlet port. Preferably, said at least one second siphon structure may be adapted to provide a fluid trap between said inlet port and said outlet port during use.

This provides the advantage that acoustic dampening may be further enhanced by trapping fluid within the siphon structure, in particular, a liquid such as left-over water.

### Brief Description of the Drawings

Example embodiment(s) of the invention are now described, by way of example only, hereinafter with reference to the accompanying drawings, in which:

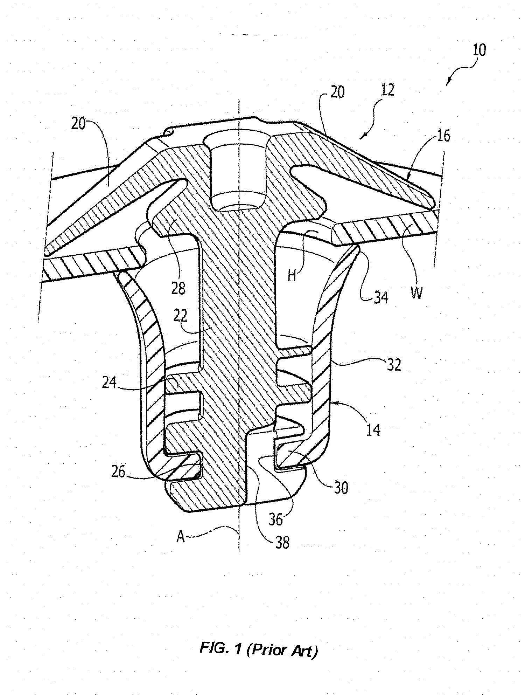

**Figure 1** **(Prior Art)** shows a typical drain plug installed within a hole of a horizontal wall;
**Figure 2****, A to D,** shows various perspective views of an example embodiment of the drain plug of the present invention;
**Figure 3** shows (A) a first perspective view and (B) a second perspective view of the internal structure of the example embodiment of Figure 2;
**Figure 4** shows an exploded view of the example embodiment of Figure 2;
**Figure 5** shows a perspective view of the wall structure (A) before and (B) after assembly of the drain plug;
**Figure 6****, A to C,** shows different perspective views of another example embodiment of the drain plug of the present invention;
**Figure 7** shows (A) an internal view of the example embodiment of Figure 6 when assembled (transparent), and (B) the fluid flow member removed from the attachment member;
**Figure 8** shows a perspective view of the wall structure (A) before and (B) after assembly of the drain plug of Figures 6.

### Detailed Description

The described example embodiment relates to a drain plug, and in particular a water drainage plug, which can be inserted into an aperture of a wall structure, for example, a wall structure of a vehicle.

Certain terminology is used in the following description for convenience only and is not limiting. The words 'upper' and 'lower' and designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, 'first', 'second', 'third' etc. merely indicate that different instances of like objects are being referred to and are not intended to imply that the objects so described must be in a given sequence, either temporally, spatially, in ranking or in any other manner. Like reference numerals are used to depict like features throughout.

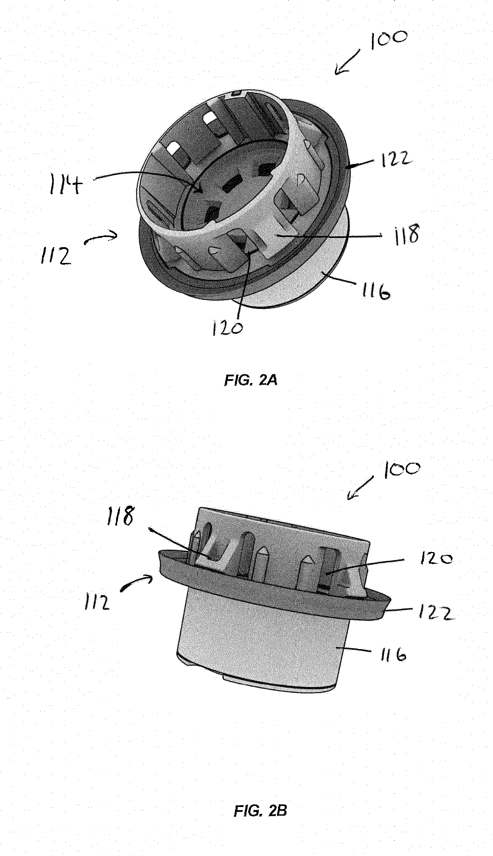

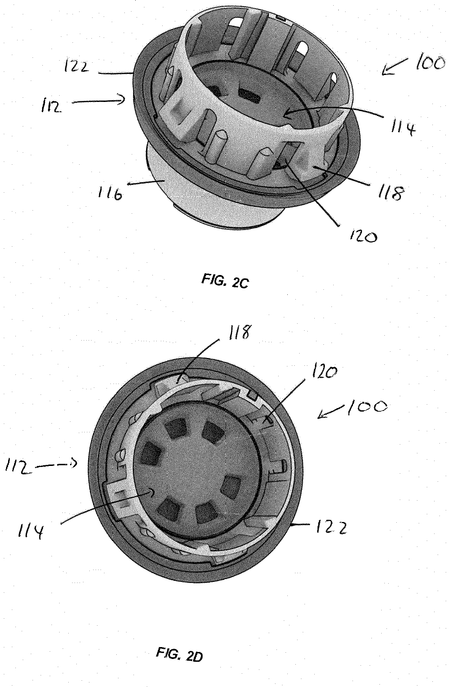

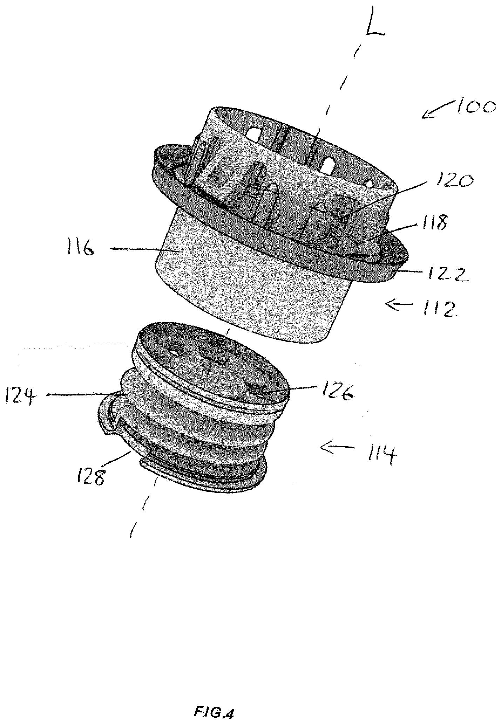

Figures 2A to 2D, 3A, 3B and 4 show a drain plug 100. As best shown in Figure 4, the drain plug 100 includes an attachment member 112 and a fluid flow member 114. The attachment member 112 includes a generally cylindrical casing member 116 defining a fluid path along a longitudinal axis L of the attachment member 112. In other examples, the casing member 116 may have another appropriate shape. The cylindrical casing member 116 is open at each end thereof. The attachment member 112 also includes a plurality of clips 118 extending outwardly from the cylindrical casing member 116 around a circumference thereof. A plurality of apertures 120 are also provided between each of the plurality of clips 118. A circumferential sealing rim 122 is provided that extends outwardly from the cylindrical casing member 116. The circumferential sealing rim 122 may provide a liquid, fluid or hermetic seal with a component, in use.

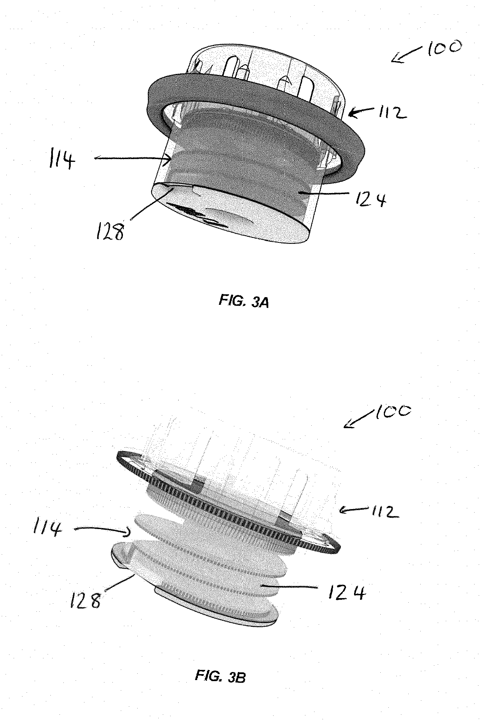

The fluid flow member 118, as shown best in Figures 3A, 3B and 4, includes a fluid conduit generally defined as a helical conduit 124. The helical conduit 124 fluidly connects a plurality of inlet ports 126 at a first end of the fluid flow member 118, and an outlet port 128 at a second end of the fluid flow member 118. The helical conduit 124 is shown having a uniformly converging conduit extending from the inlet ports 126 to the outlet port 128. Generally, the pitch of the helical conduit 124 at a region proximal the inlet ports 126 is greater than the pitch of the helical conduit 124 at a region proximal the outlet port 128.

As will be appreciated by the skilled person, the fluid conduit may have any appropriate size, shape, pitch, fluid pathway or the like. The helical conduit 124 is merely an example of an appropriate fluid conduit.

As shown in Figures 3A and 3B, the fluid flow member 114 is inserted into the attachment member 112 in use, thereby forming the drain plug 100. The fluid flow member 114 may be inserted into the attachment member 112 in any known way, for example, by being screwed into the attachment member 112. In other examples, the fluid flow member 124 may have a push-fit arrangement with the attachment member 112, the fluid flow member 124 and the attachment member 112 may have a bayonet-type fitting, or the like. In other examples, the fluid flow member 114 and the attachment member 112 may be formed as a unitary component.

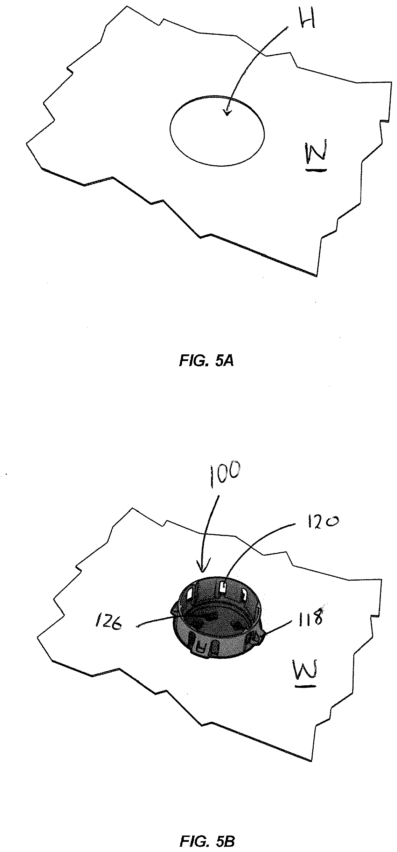

Referring to Figures 5A and 5B, the drain plug 100, in use, is pushed through a hole H in a wall structure W. The wall structure W generally includes an upper part and a lower part. The drain plug 100, once assembled, is pushed through the hole H from the lower part of the wall structure W towards the upper part of the wall structure W. That is, the drain plug 100 is pushed upwardly, for example from an outside of a vehicle towards the inside of the vehicle. In this way, the plurality of clips 118 (Figures 2A to 2D and 2C) may flex inwardly and then return to their original configuration, thereby snappingly engaging the upper part of the wall structure W, and the circumferential sealing rim 122 (Figures 2A to 2D and 4) sealingly engages a surface of the lower part of the wall structure W to provide a liquid, fluid or hermetic seal. Other appropriate retention means, other than the clips 118, or sealing means, other than the sealing rim 122, may be used. For example, the retention means may include clips, fasteners, clasps, catches, pins, hooks, buckles or the like. In other examples, the sealing means may include a sealing ring, an O-ring, an elastomeric sleeve or the like.

Referring to Figures 4 and 5B, in use, a fluid to be drained is present in the upper part of the wall structure W. The fluid flows through the apertures 120, into one or more of the inlet ports 126, through the helical conduit 124 and out of the outlet port 128. In this way, fluid is drained from the upper part of the wall structure W to the lower part of the wall structure W through the hole H. If a fluid is splashed at, or near to, the outlet port 128 at the lower part of the wall structure W, its fluid path is restricted due to the converging helical conduit 124. In this way, the splashes of fluid are prevented from passing from the outlet port 128, through the helical conduit 124 and through the inlet port 126. The converging helical conduit 124 also restricts the passage of debris or particles from the lower part of the wall structure W to the upper part of the wall structure W through the hole H.

The converging helical conduit 126 also reflects sounds waves towards the outlet port 128, thereby providing an acoustic dampening effect. In this way, the helical conduit 126 prevents external noise from passing from the lower part of the wall structure W into the upper part of the wall structure W through the hole H.

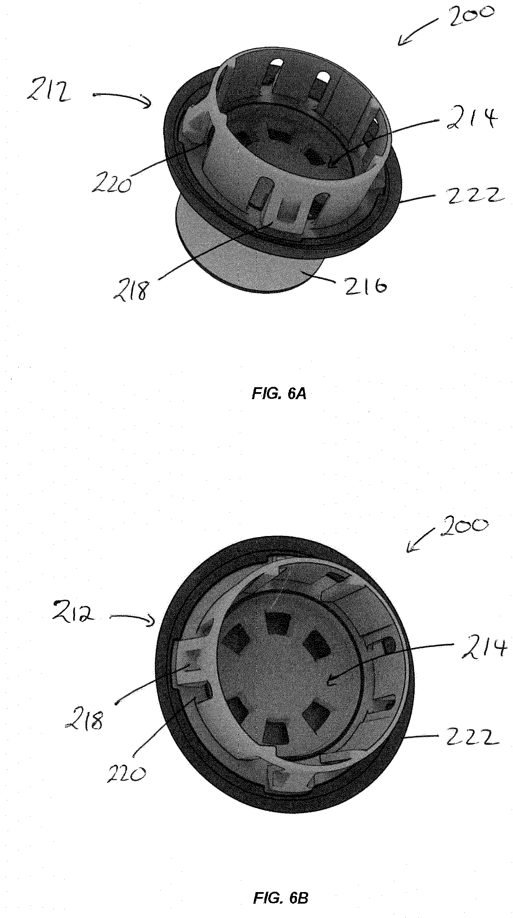

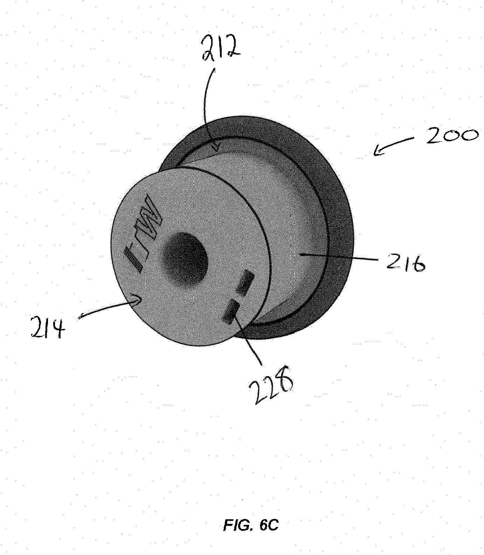

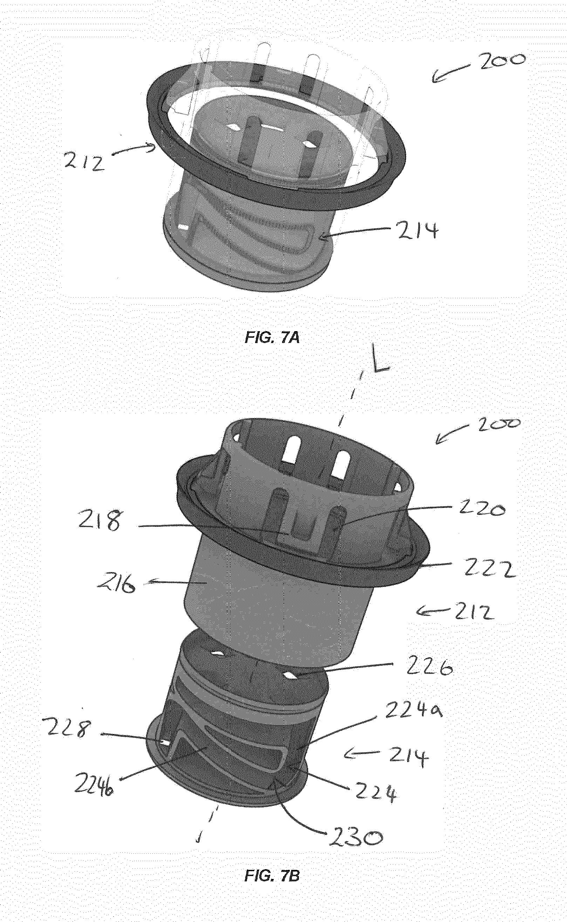

Figures 6A to 6C, 7A and 7B show another drain plug 200. As best shown in Figure 7B, the drain plug 200 includes an attachment member 212 and a fluid flow member 214. The attachment member 212 includes a generally cylindrical casing member 216 defining a fluid path along a longitudinal axis L of the attachment member 212. In other examples, the casing member 216 may have another appropriate shape. The cylindrical casing member 216 is open at each end thereof. The attachment member 212 also includes a plurality of clips 218 extending from the cylindrical casing member 216 around a circumference thereof. A plurality of apertures 220 are also provided between each of the plurality of clips 218. A circumferential sealing rim 222 is provided that extends outwardly from the cylindrical casing member 216. The circumferential sealing rim 222 may provide a liquid, fluid or hermetic seal with a component, in use.

The fluid flow member 218, as shown best in Figures 7A and 7B, includes a fluid conduit generally defined as a siphon 224 extending between an inlet port 226 and an outlet port 228. The siphon 224 includes a first siphon structure 224a fluidly connected to the inlet port 226, and a second siphon structure 224b fluidly connected to the outlet port 228. The first and second siphon structures 224a, 224b are fluidly connected to one another. The second siphon structure 224b defines a fluid trap 230 at a fluid connection point between the first and second siphon structures 224a, 224b, such that fluid may be trapped therein, in use. Additionally, a second siphon (not shown) may be present, the second siphon mirroring the first siphon in its structure.

As will be appreciated by the skilled person, the fluid conduit may have any appropriate size, shape, pitch or the like. The siphon 224 is merely an example of an appropriate fluid conduit. A singe or a plurality of siphons 224 may be present, connecting either a single inlet port 226 to a single outlet port 228, a single inlet port 226 to multiple outlet ports 228, multiple inlet ports 226 to a single outlet port, or multiple inlet ports 226 to multiple outlet ports 228. Where a plurality of siphons 224 are included, each may be identical, substantially identical or different in shape and structure.

As shown in Figure 7A, the fluid flow member 214 is inserted into the attachment member 212 in use, thereby forming the drain plug 200. The fluid flow member 214 may be inserted into the attachment member 212 in any known way, for example, by being screwed into the attachment member 212. In other examples, the fluid flow member 224 may have a push-fit arrangement with the attachment member 212, the fluid flow member 224 and the attachment member 212 may have a bayonet-type fitting, or the like. In other examples, the fluid flow member 114 and the attachment member 112 may be formed as a unitary component.

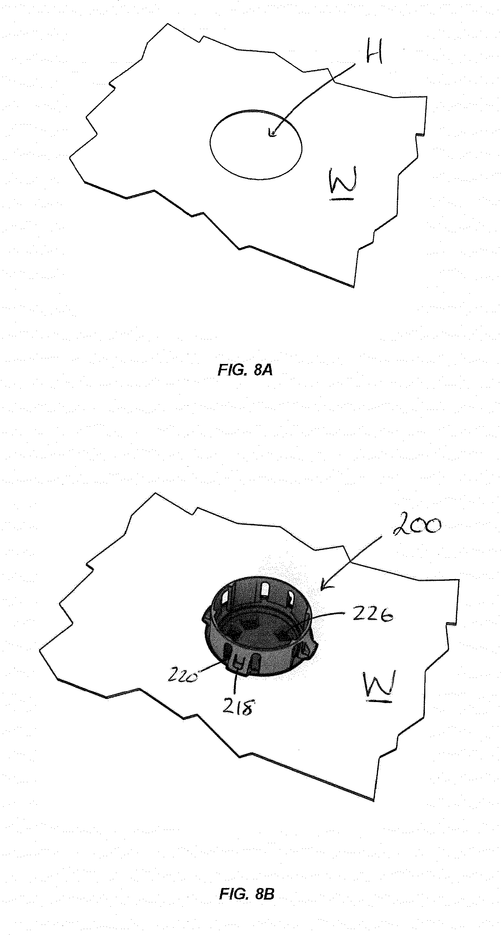

Referring to Figures 8A and 8B, the drain plug 200, in use, is pushed through a hole H in a wall structure W. The wall structure W generally includes an upper part and a lower part. The drain plug 200, once assembled, is pushed from the lower part of the wall structure W towards the upper part of the wall structure W through the hole H. That is, the drain plug 100 is pushed upwardly, for example from an outside of a vehicle towards the inside of the vehicle. In this way, the plurality of clips 218 (Figures 6A, 6B and 7B) may flex inwardly and then return to their original configuration, thereby snappingly engaging the upper part of the wall structure W, and the circumferential sealing rim 222 (Figures 6A to 6C and 7B) sealingly engages a surface of the lower part of the wall structure W to provide a liquid, fluid or hermetic seal. Other appropriate retention means, other than the clips 218, or sealing means, other than the sealing rim 222, may be used. For example, the retention means may include clips, fasteners, clasps, catches, pins, hooks, buckles or the like. In other examples, the sealing means may include a sealing ring, an O-ring, an elastomeric sleeve or the like.

Referring to Figures 7B and 8B, in use, a fluid to be drained is present in the upper part of the wall structure W. The fluid flows through the apertures 220, into one or more of the inlet ports 226, through the siphon conduit 224 and out of the outlet port 228. In this way, fluid is drained from the upper part of the wall structure W to the lower part of the wall structure W through the hole H. If a fluid is splashed towards the outlet port 228 at the lower part of the wall structure W, its fluid path is restricted due to the second siphon structure 224b. In this way, the splashes of fluid are prevented from passing from the outlet port 228, through the first and second siphon structures 224a, 224b and through the inlet port 226. Instead, the fluid is trapped within a lower region, specifically within a fluid trap 230, of the second siphon structure 124b and retained therein. The siphon conduit 224 also restricts the passage of debris or particles from the lower part of the wall structure W to the upper part of the wall structure W, as the debris or particles may be trapped within a lower region, specifically within the fluid trap 230, of the second siphon structure 224b, in a similar manner as described above.

The siphon conduit 224 also provides an acoustic dampening effect. In particular, when a fluid is trapped in the fluid trap 230 created by the second siphon structure 224b, it provides a medium to absorb, and prevent further passage of, sound waves, thereby preventing the passage of sound waves between the outlet port 228 and the inlet port 226. In this way, the siphon conduit 224 prevents external noise from passing from the lower part of the wall structure W into the upper part of the wall structure W through the hole H.

The attachment members 112, 212 and the fluid flow members 114, 214 may comprise any appropriate material. For example, the attachment members 112, 212 and the fluid flow members 114, 214 may each, independently, comprise an appropriate thermoplastic material. Some examples of suitable thermoplastic materials include a polyacetal (POM), such as acetal homopolymer (POM-H) or acetal co-polymer (POM-C) with any appropriate filler, such as glass fibres. In other examples, the thermoplastic material may include acrylonitrile butadiene styrene (ABS), polycarbonate (PC), polyethylene (PE), polypropylene (PP), polyvinyl chloride (PVC) or the like. Any appropriate combination may be utilised.

The sealing rim 122, 222 may comprise any appropriate material. For example, the sealing rims 122, 222 may each, independently, comprise an appropriate thermoplastic elastomeric material. Some examples of suitable thermoplastic elastomeric materials include styrenic block copolymers (TPS), thermoplastic polyolefinelastomers (TPO), thermoplastic vulcanizates (TPV), thermoplastic polyurethanes (TPU), thermoplastic copolyesters (TPC) and thermoplastic polyamides (TPA).

The drain plugs 100, 200 may be used in any appropriate setting, including the automotive industry. In some examples, the wall structure W through which the drain plugs 100, 200 are inserted comprises a metal. In other examples, the wall structure W may comprise a plastics material.

It will be appreciated by persons skilled in the art that the above embodiment(s) have been described by way of example only and not in any limitative sense, and that various alterations and modifications are possible without departing from the scope of the invention as defined by the appended claims. Various modifications to the detailed designs as described above are possible, for example, variations may exist in shape, size, arrangement (i.e. a single unitary components or two separate components), assembly or the like.

## Claims

1. A drain plug (100, 200), comprising:
an attachment member (112, 212), configured to fixingly couple into an aperture (H) of a wall structure (W), so as to provide a fluid path along a longitudinal axis (L) of said attachment member (112, 212) through the wall structure (W), and comprising a casing member (116, 216) axially protruding along said longitudinal axis (L) towards a distal end of said attachment member (112, 212), and
a fluid flow member (114, 214), sealingly engageable with said casing member (116, 216), comprising at least one fluid conduit (124, 218), extending between an inlet port (126, 226) and an outlet port (128, 228) of said drain plug (100, 200), said fluid conduit (124, 218) comprising at least one first region towards said inlet port (126, 226) and at least one second region, downstream of said at least one first region towards said outlet port (128, 228),
**characterised in that** the cross-sectional area of said at least one first region is greater than the cross-sectional area of said at least one second region.

2. A plug according to claim 1, wherein said fluid conduit is a helical fluid conduit (124) that is uniformly converging from said at least one first region towards said at least one second region.

3. A plug according to claim 2, wherein the pitch of said helical conduit (124) differs between said at least one first region and said at least one second region.

4. A plug according to claim 1, wherein said fluid conduit (218) further comprises at least one siphon (224).

5. A plug according to claim 4, wherein said at least one siphon (224) further comprises a first siphon structure (224a) in fluid communication with said inlet port (226) and at least one second siphon (224b) structure downstream from said first siphon structure (224a) and in fluid communication with said outlet port (228).

6. A plug according to claim 5, wherein said at least one second siphon structure (224b) is adapted to provide a fluid trap (230) between said inlet port (226) and said outlet port (228) during use.

## Patentansprüche

1. Ablaufstöpsel (100, 200), aufweisend:
ein Befestigungselement (112, 212), das so konfiguriert ist, dass es fest in eine Öffnung (H) einer Wandstruktur (W) gekoppelt ist, um einen Fluidpfad entlang einer Längsachse (L) des Befestigungselements (112, 212) durch die Wandstruktur (W) bereitzustellen, und ein Gehäuseelement (116, 216) aufweist, das entlang der Längsachse (L) in Richtung eines distalen Endes des Befestigungselements (112, 212) axial vorsteht, und
ein Fluidströmungselement (114, 214), das abdichtend mit dem Gehäuseelement (116, 216) in Eingriff bringbar ist, das zumindest eine Fluidleitung (124, 218) aufweist, die sich zwischen einer Einlassöffnung (126, 226) und einer Auslassöffnung (128, 228) des Ablaufstöpsels (100, 200) erstreckt, wobei die Fluidleitung (124, 218) zumindest einen ersten Bereich in Richtung auf die Einlassöffnung (126, 226) und zumindest einen zweiten Bereich stromabwärts von dem zumindest einen Bereich in Richtung der Auslassöffnung (128, 228) aufweist,
**dadurch gekennzeichnet, dass** die Querschnittsfläche des zumindest einen ersten Bereichs größer als die Querschnittsfläche des zumindest einen zweiten Bereichs ist.

2. Stöpsel nach Anspruch 1, wobei die Fluidleitung eine schraubenförmige Fluidleitung (124) ist, die von dem zumindest einen ersten Bereich zu dem zumindest einen zweiten Bereich gleichmäßig konvergiert.

3. Stöpsel nach Anspruch 2, wobei die Steigung der schraubenförmigen Leitung (124) zwischen dem zumindest einen ersten Bereich und dem zumindest einen zweiten Bereich unterschiedlich ist.

4. Stöpsel nach Anspruch 1, wobei die Fluidleitung (218) ferner zumindest einen Siphon (224) aufweist.

5. Stöpsel nach Anspruch 4, wobei der zumindest eine Siphon (224) ferner eine erste Siphonstruktur (224a) in Fluidverbindung mit der Einlassöffnung (226) und zumindest eine zweite Siphonstruktur (224b) stromabwärts von der ersten Siphonstruktur (224a) und in Fluidverbindung mit der Auslassöffnung (228) aufweist.

6. Stöpsel nach Anspruch 5, wobei die zumindest eine zweite Siphonstruktur (224b) so angepasst ist, dass sie während des Gebrauchs eine Fluidfalle (230) zwischen der Einlassöffnung (226) und der Auslassöffnung (228) bereitstellt.

## Revendications

1. Bouchon de vidange (100, 200), comprenant :
un élément de fixation (112, 212), configuré pour s'accoupler de manière fixe dans une ouverture (H) d'une structure de paroi (W), afin de fournir un trajet de fluide le long d'un axe longitudinal (L) dudit élément de fixation (112, 212) à travers la structure de paroi (W), et comprenant un élément de boîtier (116, 216) faisant saillie axialement le long dudit axe longitudinal (L) vers une extrémité distale dudit élément de fixation (112, 212), et
un élément d'écoulement de fluide (114, 214), pouvant s'engager de manière étanche avec ledit élément de boîtier (116, 216), comprenant au moins un conduit de fluide (124, 218), s'étendant entre un orifice d'entrée (126, 226) et un orifice de sortie (128, 228) dudit bouchon de vidange (100, 200), ledit conduit de fluide (124, 218) comprenant au moins une première région vers ledit orifice d'entrée (126, 226) et au moins une deuxième région en aval de ladite au moins une première région vers ledit orifice de sortie (128, 228),
**caractérisé en ce que** la surface de section transversale de ladite au moins une première région est supérieure à la surface de section transversale de ladite au moins une deuxième région.

2. Bouchon selon la revendication 1, dans lequel ledit conduit de fluide est un conduit de fluide hélicoïdal (124) qui converge uniformément à partir de ladite au moins une première région vers ladite au moins une deuxième région.

3. Bouchon selon la revendication 2, dans lequel le pas dudit conduit hélicoïdal (124) diffère entre ladite au moins une première région et ladite au moins une deuxième région.

4. Bouchon selon la revendication 1, dans lequel ledit conduit de fluide (218) comprend en outre au moins un siphon (224).

5. Bouchon selon la revendication 4, dans lequel ledit au moins un siphon (224) comprend en outre une première structure de siphon (224a) en communication de fluide avec ledit orifice d'entrée (226) et au moins une deuxième structure de siphon (224b) en aval de ladite première structure de siphon (224a) et en communication de fluide avec ledit orifice de sortie (228).

6. Bouchon selon la revendication 5, dans lequel ladite au moins une deuxième structure de siphon (224b) est adaptée pour fournir un captage de fluide (230) entre ledit orifice d'entrée (226) et ledit orifice de sortie (228) durant l'utilisation.
